# EUROPEAN PATENT APPLICATION

(11) **EP 4 807 588 A1**
(43) Date of publication of application: **16.09.2026**
(21) Application number: 25881041.5
(22) Date of filing: 02.01.2025
(51) Int. Cl.: G06F 18/10, G06F 18/2131

(54) **SIGNAL PROCESSING METHOD AND SYSTEM, ENGINEERING MACHINERY, STORAGE MEDIUM AND PROGRAM**

(30) Priority: 21.10.2024 CN 202411471103
(71) Applicant: JIANGSU XCMG STATE KEY LABORATORY TECHNOLOGY CO., LTD., Xuzhou Jiangsu 221004 (CN)
(72) Inventor: FENG, Yuqing, Xuzhou, Jiangsu 221004 (CN); WANG, Qian, Xuzhou, Jiangsu 221004 (CN); WANG, Bin, Xuzhou, Jiangsu 221004 (CN); QIU, Shengqi, Xuzhou, Jiangsu 221004 (CN)
(74) Representative: Specht, Peter
(86) International application number: PCT/CN2025/070069
(87) International publication number: WO 2026/086023

(57) **Abstract**

Provided in the present disclosure are a signal processing method and system, engineering machinery, a storage medium and a program. The signal processing method comprises: preprocessing an original signal of a sensor to obtain a preprocessed signal; performing weighted fractional Fourier transform on the preprocessed signal to obtain a signal undergone the weighted fractional Fourier transform; performing spectral analysis on the signal undergone the weighted fractional Fourier transform to obtain spectral components, the spectral components comprising a fundamental frequency component and a harmonic component; on the basis of the fundamental frequency component and the harmonic component, separating an interference signal from the original signal, so as to obtain a useful signal; and outputting the useful signal to a control system of engineering machinery.

## Description

### CROSS-REFERENCE TO RELATED APPLICATIONS

The present application is based on and claims priority to China Patent Application No. 202411471103.6 filed on October 21, 2024, the disclosure of which is incorporated by reference herein in its entirety.

### TECHNICAL FIELD

The present disclosure relates to the field of construction machinery control, in particular to a signal processing method and system, a construction machinery, a storage medium and a program.

### BACKGROUND

With the development of automation and intelligence of the construction machinery, the unmanned excavator is widely applied in mining, building construction, environmental restoration and other fields increasingly. The unmanned excavator realizes remote or automatic operation through a sensor and a control system, which reduces the dependence on manual operation and improves the working efficiency and safety. In practical application, the operating environment of the excavator is usually very complicated, with various electromagnetic interference, mechanical vibration and noise interference, and these interference signals may affect the stability and accuracy of the unmanned control system.

A plurality of anti-interference technologies are used in the related art. For example, a Kalman filter may be used to filter the signal. The Kalman filter which is a recursive filtering algorithm, is widely applied in signal processing and estimation, and its main advantage is that it is possible to update the signal estimation in real time and presents a favorable smoothing effect.

### SUMMARY

According to an aspect of the present disclosure, a signal processing method is provided. The method comprises: preprocessing an original signal of a sensor to obtain a preprocessed signal; performing weighted fractional Fourier transform on the preprocessed signal to obtain a weighted fractional Fourier transformed signal; performing spectrum analysis on the weighted fractional Fourier transformed signal to obtain spectral components, wherein the spectral components comprise a fundamental frequency component and a harmonic component; separating an interference signal from the original signal based on the fundamental frequency component and the harmonic component to obtain a useful signal; and outputting the useful signal to a control system of construction machinery.

In some embodiments, the interference signal corresponds to the harmonic component and the useful signal corresponds to the fundamental frequency component.

In some embodiments, the performing of the weighted fractional Fourier transform on the preprocessed signal to obtain the weighted fractional Fourier transformed signal comprises: obtaining a transform order of the weighted fractional Fourier transform; calculating a weighting function of the weighted fractional Fourier transform based on the transform order; and performing the weighted fractional Fourier transform on the preprocessed signal based on the weighting function to obtain the weighted fractional Fourier transformed signal.

In some embodiments, the obtaining of the transform order of the weighted fractional Fourier transform comprises: performing, based on each of a plurality of transform orders within a predetermined range, simulation processing on a signal transmission quality of the preprocessed signal through a communication quality simulation model to obtain a simulation result, so as to obtain a plurality of simulation results corresponding to the plurality of transform orders, wherein a channel coding mode of the communication quality simulation model adopts the weighted fractional Fourier transform, and each of the plurality of simulation results comprises a bit error rate or a packet loss rate; and selecting a transform order corresponding to the simulation result with a minimum bit error rate or a minimum packet loss rate from the plurality of simulation results as a required transform order.

In some embodiments, the separating of the interference signal from the original signal based on the fundamental frequency component and the harmonic component to obtain the useful signal comprises: dynamically adjusting a threshold for spectrum analysis through an adaptive threshold method, wherein the threshold comprises a first threshold and a second threshold, and the first threshold is less than the second threshold; based on the fundamental frequency component and the harmonic component, taking a signal part of the original signal corresponding to a spectral component in a range between the first threshold and the second threshold as the useful signal, and taking a signal part of the original signal corresponding to a spectral component in a range less than the first threshold and a signal part of the original signal corresponding to a spectral component in a range greater than the second threshold as the interference signal; and removing the interference signal and retaining the useful signal.

In some embodiments, the signal processing method further comprises: performing segmentation processing on the original signal with a non-stationary interference signal to obtain multiple signal segments, wherein the interference signal of each of the multiple signal segments is in a stationary state; and performing preprocessing, weighted fractional Fourier transform and spectrum analysis on each of the multiple signal segments to separate the interference signal of the each of the multiple signal segments from the each of the multiple signal segments, so as to obtain a useful signal of the each of the multiple signal segments.

In some embodiments, the preprocessing of the original signal of the sensor comprises: filtering, denoising and normalizing the original signal of the sensor.

In some embodiments, the signal processing method further comprises: performing anti-interference processing on the useful signal before outputting the useful signal to the control system of the construction machinery, wherein the anti-interference processing adopts an adaptive filtering mode.

In some embodiments, the signal processing method further comprises: obtaining a signal collected by the sensor before preprocessing the original signal of the sensor, wherein the sensor is arranged on the construction machine; and performing preliminary processing on the signal collected by the sensor to obtain the original signal of the sensor, wherein the preliminary processing comprises analog-to-digital conversion processing and data buffering processing.

According to another aspect of the present disclosure, a signal processing system is provided. The system comprises: a preprocessing module configured to preprocess an original signal of a sensor to obtain a preprocessed signal; a weighted fractional Fourier transform processing module configured to perform weighted fractional Fourier transform on the preprocessed signal to obtain a weighted fractional Fourier transformed signal; an interference signal separation module configured to perform spectrum analysis on the weighted fractional Fourier transformed signal to obtain spectral components, wherein the spectral components comprise a fundamental frequency component and a harmonic component, and separate an interference signal from the original signal based on the fundamental frequency component and the harmonic component to obtain a useful signal; and a signal output module configured to output the useful signal to a control system of construction machinery.

According to another aspect of the present disclosure, a signal processing system is provided. The signal processing system comprises: a memory; and a processor coupled to the memory, wherein the processor is configured to perform the signal processing method as described previously based on instructions stored in the memory.

According to another aspect of the present disclosure, a construction machinery is provided. The construction machinery comprises: the signal processing system as described previously.

In some embodiments, the construction machinery is an unmanned excavator.

According to another aspect of the present disclosure, a computer readable storage medium is provided. The computer readable storage medium has stored thereon computer instructions that, when executed by a processor, implement the signal processing method as described previously.

According to another aspect of the present disclosure, a computer program is provided. The computer program comprises instructions that, when executed by a processor, cause the processor to perform the signal processing method as described previously.

Other features and advantages of the present disclosure will become explicit from the following detailed description of exemplary embodiments of the present disclosure with reference to the accompanying drawings.

### BRIEF DESCRIPTION OF THE DRAWINGS

The accompanying drawings which constitute part of this specification, describe the embodiments of the present disclosure, and together with this specification, serve to explain the principles of the present disclosure.

The present disclosure may be more explicitly understood from the following detailed description with reference to the accompanying drawings, in which:
Fig. 1 is a flowchart showing a signal processing method according to some embodiments of the present disclosure;
Fig. 2 is a block diagram showing a physical implementation of a discrete sequence WFRFT according to some embodiments of the present disclosure;
Fig. 3 is a block diagram schematically showing the structure of a signal processing system according to some embodiments of the present disclosure;
Fig. 4 is a block diagram schematically showing a structure of a signal processing system according to other embodiments of the present disclosure;
Fig. 5 is a block diagram schematically showing a structure of a signal processing system according to other embodiments of the present disclosure;
Fig. 6 is a block diagram schematically showing a structure of a signal processing system according to other embodiments of the present disclosure.

### DETAILED DESCRIPTION

Various exemplary embodiments of the present disclosure will now be described in detail with reference to the accompanying drawings. It should be noted that: the relative arrangements, numerical expressions and values of the components and steps elaborated in these embodiments shall not limit the scope of the present invention unless specified otherwise.

At the same time, it should be understood that, for ease of description, the dimensions of various parts shown in the accompanying drawings are not drawn according to actual proportional relations.

The following descriptions of at least one exemplary embodiment which are in fact merely illustrative, shall by no means serve as any limitation on the present disclosure as well as its application or use.

The techniques, methods, and devices known to those of ordinary skill in the relevant field might not be discussed in detail. However, the techniques, methods, and devices shall be considered as part of the specification where appropriate.

Among all the examples shown and discussed here, any specific value shall be construed as merely exemplary, rather than as a limitation. Thus, other examples in the exemplary embodiments may have different values.

It should be noted that: similar reference numerals and letters present similar items in the following accompanying drawings, and therefore, once a certain item is defined in one accompanying drawing, a further discussion thereof is not required in subsequent accompanying drawings.

The inventors of the present disclosure have found that, in the related art, when the Kalman filter processes intense interference signals, the filtering effect may be significantly reduced, and especially during the operation process of the excavator, the performance of the Kalman filter is often difficult to meet the requirements due to complex environmental interference.

The inventors of the present disclosure also have found that, in practical operation of the construction machinery (for example, the unmanned excavator), the complexity of the interference signal is mainly embodied in the following aspects:
(1) Multi-source interference: during the operation process of the construction machinery, there are present with multiple interference sources, comprising electromagnetic interference, mechanical vibration, environmental noise, and the like. These interference sources might act on the sensor and the control system of the construction machinery at the same time, which results in degraded signal quality.
(2) Non-stationarity: the frequency and amplitude of the interference signal which change with time, present non-stationarity characteristics. This makes it difficult to effectively filter out these interference signals for the frequency domain filtering technology in the related art.
(3) Complex spectrum characteristics: the spectrum characteristics of the interference signals which are complex, might contain multiple frequency components and harmonic components, which brings great challenges to signal processing.

In general, in the related art, the related signal of the construction machinery has a poor anti-interference capability.

In view of this, the embodiment of the present disclosure provides a signal processing method to improve the anti-interference capability for the related signal of the construction machinery.

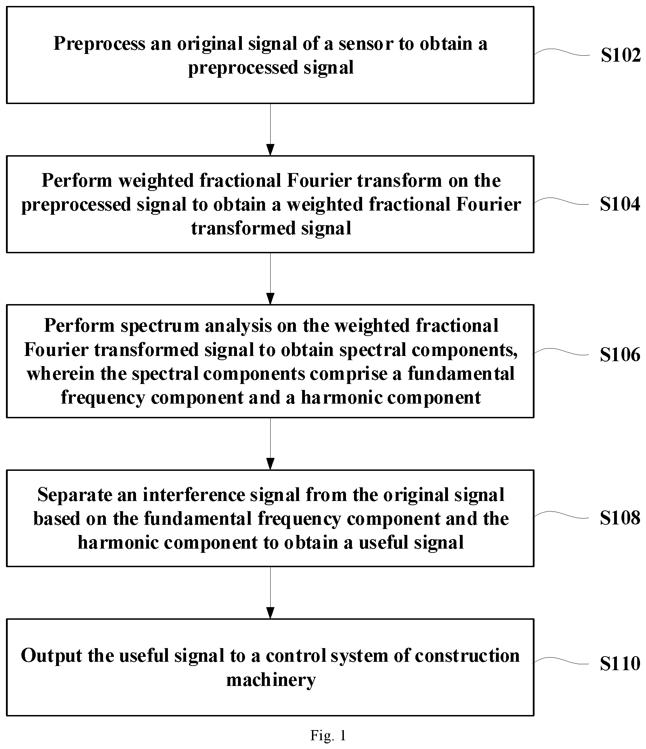

Fig. 1 is a flowchart showing a signal processing method according to some embodiments of the present disclosure. As shown in Fig. 1, the signal processing method comprises steps S102 to S108.

In step S102, an original signal of a sensor is preprocessed to obtain a preprocessed signal.

For example, the step S102 comprises: filtering, denoising and normalizing the original signal of the sensor. Here, in the preprocessing step, the collected original signal is filtered, denoised and normalized to remove high-frequency noise and low-frequency drift and ensure the clarity and stability of the signal.

### (1) Filtering.

For example, high-frequency noise in the signal is removed by using a low-pass filter, and low-frequency drift in the signal is removed by using a high-pass filter. For complex interference environment, specific frequency bands may also be filtered by using a band-pass filter.

(2) Denoising.

For example, impulse noise in the signal is removed by using a median filter: $g \left(x, y\right) = med \left\{f\left(x-m, y-n\right), m, n∈w\right\} ,$ where *f*(*x, y*) is original data (for example, an original image), *g*(*x, y*) is processed data (for example, a processed image), *m*, *n* represents a size of a two-dimensional processing window, which is generally an odd area, and w represents a maximum value of the two-dimensional processing window that may be obtained by m and n.

For another example, the noise components in the signal are removed through multi-scale analysis by using a wavelet denoising method: ${ψ}_{a , b} \left(x\right) = \frac{1}{\sqrt{\left|a\right|}} ψ \left(\frac{x - b}{a}\right) ,$ where Ψ(*x*) is a wavelet generating function, *ψ_{a,b}*(*x*) is a continuous wavelet function dependent on (*a, b*)*, a* is a non-zero real number and *b* is a time shift center.

### (3) Normalizing.

An amplitude of the signal is normalized so that the amplitude of the signal is within a standard range, which facilitates subsequent processing. The signal is temporally normalized so that the sampling frequency of the signal is consistent, which ensures the synchronization of the data of each sensor.

In step S104, weighted fractional Fourier transform (referred to as WFRFT for short) is performed on the preprocessed signal to obtain a weighted fractional Fourier transformed signal.

Weighted fractional Fourier transform is an improved Fourier transform method, which may perform flexible conversion between frequency domain and time domain, and perform weight adjustment according to the characteristics of the signal, so as to effectively process non-stationary signals.

The principles of weighted fractional Fourier transform are as follows: fractional Fourier transform (referred to as FrFT for short) is a generalized form of Fourier transform, which may be regarded as arbitrary angular rotation between time domain and frequency domain. Weighted fractional Fourier transform (WFRFT) which introduces weighting function on the basis of FrFT, further enhances the transform flexibility and adaptability. A kernel function *K*(*α; u, t*) of WFRFT may be expressed as: $K \left(α; u; t\right) = {ω}_{0} \left(α\right) δ \left(u-t\right) + \frac{1}{\sqrt{2 π}} {ω}_{1} \left(α\right) {e}^{- jut} + {ω}_{2} \left(α\right) δ \left(t-u\right) + \frac{1}{\sqrt{2 π}} {ω}_{3} \left(α\right) {e}^{jut} ,$ where *α* is a transform order, t represents time, u represents an input signal, and *ω*₀, *ω*₁, *ω*₂, *ω*₃ are weighting coefficients.

By performing α-order classical FrFT transform on the signal *f*(*t*) in square integrable space, the definition (i.e., the weighting function) of WFRFT may be described as: ${F}_{ω}^{α} \left[f\left(t\right)\right] = {\int }_{- ∞}^{+ ∞} K \left(α; u; t\right) f \left(t\right) dt = {ω}_{0}^{α} f \left(t\right) + {ω}_{1}^{α} F \left(t\right) + {ω}_{2}^{α} f \left(-t\right) + {ω}_{3}^{α} F \left(-t\right) .$

In the formula, ${F}_{ω}^{α}$ is an α-order WFRFT operator, *f*(*t*)*, F*(*t*)*, f*(*-t*)*, F*(*-t*) are results of *f*(*t*) subjected to discrete Fourier transform for 0 to 3 times respectively, *f*(*t*) is a signal to be transformed, and ${\left\{{ω}_{l}\right\}}_{l = 0}^{3}$ is the weighting coefficient corresponding to each state function, which is defined as: ${ω}_{l} \left(α\right) = cos \left[\frac{\left(α-l\right) π}{4}\right] ∗ cos \left[\frac{\left(α-l\right) π}{2}\right] ∗ exp \left[\pm \frac{3 j \left(α-l\right) π}{4}\right] , \left(l=0,1,2,3\right)$ where for the third term to the right of the equal sign in the above-described formula (5), when the exponent is "+", the representative axis representing WFRFT rotates counterclockwise around the origin, and when the exponent is "-", the representative axis representing WFRFT rotates clockwise around the origin, and the weighting coefficients defined by the two methods are conjugate with each other and the rotation directions are opposite to each other. *α* is the transform order.

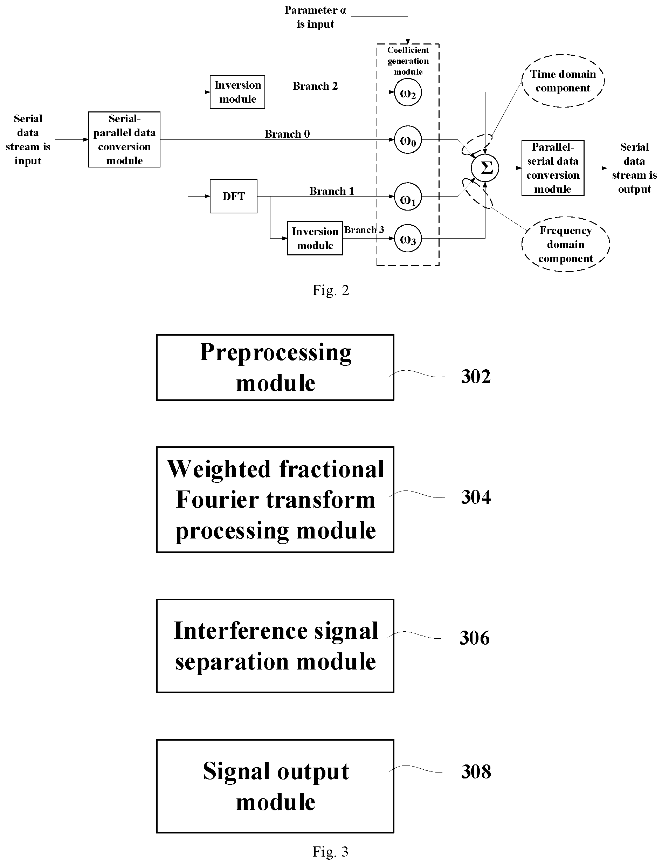

Here, the process of WFRFT transform may be shown with reference to Fig. 2. Fig. 2 is a block diagram showing a physical implementation of a discrete sequence WFRFT according to some embodiments of the present disclosure. Fig. 2 demonstrates a detailed structure of a processing module of weighted fractional Fourier transform, which comprises a related WFRFT algorithm unit and its working principles.

As shown in Fig. 2, a serial data stream is input, so that the serial data stream is converted into a parallel data stream by a serial-parallel data conversion module. The transform order *α* is input to a coefficient generation module to generate the weighting coefficients *ω*₀, *ω*₁,*ω*₂, *ω*₃. The data stream *f*(*t*) corresponds to the weighting coefficient *ω*₀. The data stream *f*(*t*) becomes *f*(*-t*) after passing through the inversion module, and *f*(*-t*) corresponds to the weighting coefficient *ω*₂. The data stream *f*(*t*) becomes *F*(*t*) after passing through the discrete Fourier transform (DFT) module, and *F*(*t*) corresponds to the weighting coefficient *ω*₁. *F*(*t*) becomes *F*(-*t*) after passing through the inversion module, and *F*(-*t*) corresponds to the weighting coefficient *ω*₃. Then, the data stream *ω*₀*f*(*t*) + *ω*₁*F*(*t*) + *ω*₂*f*(-*t*) + *ω*₃*F*(-*t*) is obtained by addition. The data stream is converted by the parallel-serial data conversion module to obtain a serial data stream, which is then output. In this way, WFRFT transform is completed.

In some embodiments, the step S104 comprises: obtaining a transform order of the weighted fractional Fourier transform; calculating a weighting function (i.e., the weighting function (4) described above) of the weighted fractional Fourier transform based on the transform order; and performing the weighted fractional Fourier transform on the preprocessed signal based on the weighting function to obtain the weighted fractional Fourier transformed signal. In this embodiment, a corresponding weighting function may be obtained by obtaining an appropriate transform order, so that weighted fractional Fourier transform may be performed on the preprocessed signal based on the weighting function, thereby implementing the operation of performing weighted fractional Fourier transform on the preprocessed signal.

Of course, in order to perform weighted fractional Fourier transform on the preprocessed signal, an appropriate transform order can be obtained.

In some embodiments, the obtaining of the transform order of the weighted fractional Fourier transform comprises: performing, based on each of a plurality of transform orders within a predetermined range, simulation processing on a signal transmission quality of the preprocessed signal through a communication quality simulation model to obtain a simulation result, so as to obtain a plurality of simulation results corresponding to the plurality of transform orders, wherein a channel coding mode of the communication quality simulation model adopts the weighted fractional Fourier transform, and each of the plurality of simulation results comprises a bit error rate or a packet loss rate; and selecting a transform order corresponding to the simulation result with a minimum bit error rate or a minimum packet loss rate from the plurality of simulation results as a required transform order.

In the above-described embodiments, the communication quality simulation model may use a communication quality simulation model framework known to those skilled in the art, and the channel coding mode of the communication quality simulation model adopts the weighted fractional Fourier transform, that is, the channel coding mode corresponding to the weighted fractional Fourier transform, so as to select an appropriate transform order for the weighted fractional Fourier transform according to a simulation result. By selecting a simulation result with the minimum bit error rate or the minimum packet loss rate from the plurality of simulation results, the transform order corresponding to the simulation result is determined as a required appropriate transform order. In this way, the transform order can be obtained, so as to facilitate performing weighted fractional Fourier transform on the preprocessed signal.

For example, the above-described predetermined range is [-1, 1]. For example, a plurality of transform orders α can be determined from the predetermined range in steps of 0.1. Then, the appropriate transform order can be obtained from the plurality of transform orders α through the above-described process.

Of course, those skilled in the art can understand that, the above-described predetermined range is only exemplary, and the scope of the present disclosure is not limited thereto. Those skilled in the art may determine the predetermined range as necessary.

As described above, an appropriate transform order *α* may be selected. The appropriate transform order may be selected according to the characteristics and the spectrum distribution conditions of the signal. After selecting the appropriate transform order, the fractional order kernel function K(α; u, t) is calculated. Next, WFRFT transform is performed on the preprocessed signal to obtain a representation form of the signal in the current time-frequency domain.

In some embodiments, the weighting function can be adjusted according to the spectrum characteristics of the signals to highlight useful signals and suppress interference signals.

Suppose that the parameters of WFRFT used in the information interaction between a source node and a destination node are not obtained by an eavesdropping node. The estimation result of the eavesdropping node on the source data symbol sequence is composed of a weighted combination of four sub-signals f(t), F(t), f(-t), F(-t). When the difference between the actual transform order and the predicted transform order is Δα ≠ 0, the respective separated signals interfere with each other. Therefore, only part of the signal energy from the source node is collected by the eavesdropping node for intercepting the information content, and a remaining part of the signal energy exists in the form of interference signals. The implementation of WFRFT may not affect the signal reception of the target node. Under this system, the security performance of the WFRFT system originates from equivalent mutual interference inside its signal:
(1) The energy of the signal transmitted by the source node received by the destination receiver is all used for the recovery of the communication content, and the implementation of WFRFT may not cause its performance loss.
(2) The receiving performance of the eavesdropping node is suppressed. Only a small part of the signal energy of the signal sent by the source node is leaked to the eavesdropping node for content interception, and a remaining part of the signal energy exists in the form of "self-interference noise".

In step S106, spectrum analysis is performed on the weighted fractional Fourier transformed signal to obtain spectral components, wherein the spectral components comprise a fundamental frequency component and a harmonic component.

Here, spectrum analysis is performed on the WFRFT transformed signal to identify the fundamental frequency component (i.e., a main frequency component) and the harmonic component. In this way, a frequency range of the useful signal and a frequency range of the interference signal can be determined according to the spectrum distribution.

In step S108, an interference signal is separated from the original signal based on the fundamental frequency component and the harmonic component to obtain a useful signal.

The interference signal corresponds to the harmonic component and the useful signal corresponds to the fundamental frequency component. Therefore, the frequency component and the harmonic component of the interference signal is identified by using a frequency domain feature extraction algorithm. In this way, the interference signal can be separated from the original signal, while the remaining signal is the useful signal.

In some embodiments, the step S108 comprises: dynamically adjusting a threshold for spectrum analysis through an adaptive threshold method, wherein the threshold comprises a first threshold and a second threshold, and the first threshold is less than the second threshold; based on the fundamental frequency component and the harmonic component, taking a signal part of the original signal corresponding to a spectral component in a range between the first threshold and the second threshold as the useful signal, and taking a signal part of the original signal corresponding to a spectral component in a range less than the first threshold and a signal part of the original signal corresponding to a spectral component in a range greater than the second threshold as the interference signal; and removing the interference signal and retaining the useful signal. In this way, the interference signal is separated from the original signal by dynamically adjusting a threshold of spectrum analysis using the adaptive threshold method, which can improve the identification accuracy of the interference signal.

The above-described steps S106 and S108 implement the separation and extraction of interference signals. Based on the WFRFT result, by analyzing the characteristics of the signal in each frequency domain, the frequency component and the harmonic component of the interference signal are identified and extracted, and they are separated from the original signal, so that the useful signal can be obtained.

In step S110, the useful signal is output to a control system of construction machinery.

For example, the useful signal can be output to the control system of the unmanned excavator for subsequent operation and control.

During the process of outputting the useful signals to the control system of the construction machinery, a signal format of the useful signal may be converted. The format of the useful signal is converted to ensure its compatibility with the control system. According to the requirements of the control system, the signal is coded and modulated to facilitate transmission and processing.

During signal transmission, the processed signal can be transmitted to the control system of the construction machinery (for example, the unmanned excavator) in a wired or wireless transmission mode, which improves the reliability and real-time performance of signal transmission and reduces possible signal loss or delay during the transmission process.

The output signal may be checked to improve the integrity and accuracy of the signal. For example, by using check codes and redundancy detection techniques, possible errors during the transmission process can be detected and corrected.

So far, a signal processing method according to some embodiments of the present disclosure is provided. The signal processing method comprises: preprocessing an original signal of a sensor to obtain a preprocessed signal; performing weighted fractional Fourier transform on the preprocessed signal to obtain a weighted fractional Fourier transformed signal; performing spectrum analysis on the weighted fractional Fourier transformed signal to obtain spectral components, wherein the spectral components comprise a fundamental frequency component and a harmonic component; separating an interference signal from the original signal based on the fundamental frequency component and the harmonic component to obtain a useful signal; and outputting the useful signal to a control system of construction machinery. In this method, weighted fractional Fourier transform is performed on the preprocessed signal, and then spectrum analysis is performed on the weighted fractional Fourier transformed signal. The interference signal is separated from the original signal based on a spectrum analysis result to obtain a useful signal. In this way, the anti-interference capability for the related signal of the construction machinery can be improved.

In the related art, the interference signals in the operating environment of the construction machinery are often non-stationary and complex, which makes it difficult for the frequency domain filtering technology to meet the requirements.

In view of this, the signal processing method in some embodiments of the present disclosure may further comprise: performing segmentation processing on the original signal with a non-stationary interference signal to obtain multiple signal segments, wherein the interference signal of each of the multiple signal segments is in a stationary state; and performing preprocessing, weighted fractional Fourier transform and spectrum analysis on each of the multiple signal segments to separate the interference signal of the each of the multiple signal segments from the each of the multiple signal segments, so as to obtain a useful signal of the each of the multiple signal segments. In this embodiment, for the non-stationary interference signal, WFRFT transform and spectrum analysis are performed after the signal is segmented by using a segmentation analysis method, so as to improve the separation effect.

It is to be noted that, when the original signal with a non-stationary interference signal is segmented, the interference signal of each of signal segments obtained by segmentation may be in a substantially stationary state, which is not limited to an absolute stationary state, as long as it is convenient for subsequent WFRFT transform and spectrum analysis.

In some embodiments, the signal processing method further comprises: performing anti-interference processing on the useful signal before outputting the useful signal to the control system of the construction machinery, wherein the anti-interference processing adopts an adaptive filtering mode. In this way, the anti-interference processing of the useful signal is implemented. The processed useful signal is output to the control system of the construction machinery for subsequent operation and control. After anti-interference processing, the output signal presents higher stability and accuracy, which is helpful to improve the operational performance and safety of the construction machinery.

In this anti-interference processing, the separated interference signal is filtered and suppressed so that the integrity and accuracy of the useful signal can be improved. The interference signal may be dynamically adjusted and processed by using the adaptive filtering technology.

For example, the filtering parameters may be dynamically adjusted according to the change of the interference signal by using an adaptive filter so as to optimize the filtering effect. Typical adaptive filtering algorithms comprise LMS (Least Mean Squares) algorithm or RLS (Recursive Least Squares) algorithm. The adaptive filter can automatically adjust the filtering parameters according to environmental changes, so as to present certain anti-interference capability.

In this anti-interference processing, the weight and filtering coefficient of the adaptive filter may be adjusted by monitoring the frequency and amplitude of the interference signal in real time. According to the spectrum characteristics of the interference signal, appropriate filter structures and parameters are selected.

For the interference signal that has been identified and separated, it is suppressed by using a filter so that the integrity of the useful signal can be improved. For complex interference signals, multiple filtering methods, such as adaptive filtering and frequency domain filtering, are combined to improve the interference suppression effect.

In some embodiments, the signal processing method may further comprise: obtaining a signal collected by the sensor before preprocessing the original signal of the sensor, wherein the sensor is arranged on the construction machine; and performing preliminary processing on the signal collected by the sensor to obtain the original signal of the sensor, wherein the preliminary processing comprises analog-to-digital conversion processing and data buffering processing.

Signal collection is the foundation of the entire system, and the signals generated during the operation process of the construction machinery (for example, the excavator) are collected by a plurality of sensors. These sensors are arranged at different positions of the excavator, so as to comprehensively obtain the signals of the operating state of the device and the surrounding environment.

For example, the sensors used may comprise at least one of an acceleration sensor, a gyroscope, a position sensor or an environmental sensor. The acceleration sensor is configured to measure the acceleration changes at respective positions of the construction machinery (for example, the excavator) to capture mechanical vibration signals. The gyroscope is configured to measure the angular velocity and the attitude changes of the construction machinery (for example, the excavator) to capture the rotational motion signal. The position sensor is configured to measure the position changes at respective positions of the construction machinery (for example, the excavator) to capture the movement signals. The environmental sensor is configured to measure electromagnetic interference, temperature, humidity and other parameters in the environment to capture external interference signals. In addition, the sensors used may also comprise a camera, a height sensor, an angular sensor and the like.

Taking the excavator as an example, the above-described sensors may be installed at critical positions such as the boom, the bucket and the cockpit of the excavator. For example, an acceleration sensor, a position sensor, a gyroscope, an environmental sensor and a camera may be installed on the cockpit; a height sensor and an angular sensor may be installed on the bucket; and an angular sensor may be installed on the boom. The sensors collect various signals generated during the operation process of the excavator in real time and transmits the signals to an information processor; and the information processor preliminarily processes the data of the sensors, such as analog-to-digital conversion and data buffering. In this way, the original signals of the sensors are collected.

Fig. 3 is a block diagram schematically showing the structure of a signal processing system according to some embodiments of the present disclosure. As shown in Fig. 3, the signal processing system comprises a preprocessing module 302, a weighted fractional Fourier transform processing module 304, an interference signal separation module 306 and a signal output module 308.

The preprocessing module 302 is configured to preprocess an original signal of a sensor to obtain a preprocessed signal.

In some embodiments, the preprocessing module 302 is configured to filter, denoise and normalize the original signal of the sensor. For example, the preprocessing module comprises a filter, a noise reducer and a normalization processor, and is configured to preprocess the original signal collected. High-frequency noise and low-frequency drift are removed by preprocessing so as to improve the clarity and stability of the signal.

The weighted fractional Fourier transform processing module 304 is configured to perform weighted fractional Fourier transform on the preprocessed signal to obtain a weighted fractional Fourier transformed signal.

For example, the weighted fractional Fourier transform processing module 304 comprises a WFRFT algorithm unit for performing frequency domain transform processing on the preprocessed signal. The module may flexibly adjust the transform weight and effectively process non-stationary signals according to the characteristics of the signal. WFRFT processing is performed to obtain a representation form of the signal in a time-frequency domain, which provides a basis for subsequent separation and extraction of the interference signal.

In some embodiments, the weighted fractional Fourier transform processing module is configured to obtain a transform order of the weighted fractional Fourier transform, calculate a weighting function of the weighted fractional Fourier transform based on the transform order, and perform the weighted fractional Fourier transform on the preprocessed signal based on the weighting function to obtain the weighted fractional Fourier transformed signal.

In some embodiments, the weighted fractional Fourier transform processing module is configured to: perform, based on each of a plurality of transform orders within a predetermined range, simulation processing on a signal transmission quality of the preprocessed signal through a communication quality simulation model to obtain a simulation result, so as to obtain a plurality of simulation results corresponding to the plurality of transform orders, wherein a channel coding mode of the communication quality simulation model adopts the weighted fractional Fourier transform, and each of the plurality of simulation results comprises a bit error rate or a packet loss rate; and select a transform order corresponding to the simulation result with a minimum bit error rate or a minimum packet loss rate from the plurality of simulation results as a required transform order.

The interference signal separation module 306 is configured to perform spectrum analysis on the weighted fractional Fourier transformed signal to obtain spectral components, wherein the spectral components comprise a fundamental frequency component and a harmonic component, and separate an interference signal from the original signal based on the fundamental frequency component and the harmonic component to obtain a useful signal. For example, the interference signal corresponds to the harmonic component and the useful signal corresponds to the fundamental frequency component.

For example, the interference signal separation module 306 comprises a signal separation algorithm unit for separating and extracting a useful signal and an interference signal. The module by analyzing the characteristics of the signal in each frequency domain, identifies and extracts the frequency component and the harmonic component of the interference signal, and separates the same from the original signal. The separated interference signal is further processed, and the useful signal is retained and output.

In some embodiments, the interference signal separation module is configured to: dynamically adjust a threshold for spectrum analysis through an adaptive threshold method, wherein the threshold comprises a first threshold and a second threshold, and the first threshold is less than the second threshold; based on the fundamental frequency component and the harmonic component, take a signal part of the original signal corresponding to a spectral component in a range between the first threshold and the second threshold as the useful signal, and take a signal part of the original signal corresponding to a spectral component in a range less than the first threshold and a signal part of the original signal corresponding to a spectral component in a range greater than the second threshold as the interference signal; and remove the interference signal and retain the useful signal.

The signal output module 308 is configured to output the useful signal to a control system of construction machinery.

For example, the signal output module is configured to output the useful signal to the control system of the unmanned excavator.

For example, the signal output module comprises a signal format converter and a signal verification unit. The signal output module may perform format conversion and encoding processing on the output signal according to the requirements of the control system, so as to improve the compatibility between the signal and the control system.

So far, the signal processing system according to some embodiments of the present disclosure is provided. The signal processing system comprises: a preprocessing module configured to preprocess an original signal of a sensor to obtain a preprocessed signal; a weighted fractional Fourier transform processing module configured to perform weighted fractional Fourier transform on the preprocessed signal to obtain a weighted fractional Fourier transformed signal; an interference signal separation module configured to perform spectrum analysis on the weighted fractional Fourier transformed signal to obtain spectral components, wherein the spectral components comprise a fundamental frequency component and a harmonic component, and separate an interference signal from the original signal based on the fundamental frequency component and the harmonic component to obtain a useful signal; and a signal output module configured to output the useful signal to a control system of construction machinery. The signal processing system can improve the anti-interference capability for the related signal of the construction machinery.

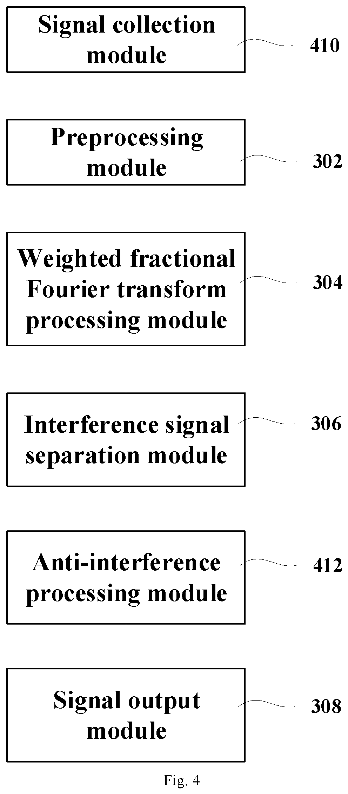

Fig. 4 is a block diagram schematically showing a structure of a signal processing system according to other embodiments of the present disclosure. As shown in Fig. 4, the signal processing system comprises a preprocessing module 302, a weighted fractional Fourier transform processing module 304, an interference signal separation module 306 and a signal output module 308.

In some embodiments, as shown in Fig. 4, the signal processing system further comprises an anti-interference processing module 412. The anti-interference processing module 412 is configured to perform anti-interference processing on the useful signal, wherein the anti-interference processing adopts an adaptive filtering mode.

For example, the anti-interference processing module 412 comprises a filtering unit and a suppression unit for filtering and suppressing the interference signal.

For another example, the anti-interference processing module may also comprise an adaptive filter and a filtering parameter adjusting unit. The anti-interference processing module dynamically adjusts and processes the interference signal by using the adaptive filtering technology, so as to minimize the influence of the interference on the useful signal. The system may automatically adjust the filtering parameters according to the change of interference signal by adaptive filtering, which improves the effectiveness and real-time performance of anti-interference processing. After anti-interference processing, the subsequent output signal presents higher stability and accuracy, which can significantly improve the operational performance and safety of the construction machinery.

In some embodiments, as shown in Fig. 4, the signal processing system further comprises a signal collection module 410. The signal collection module 410 is configured to obtain a signal collected by the sensor and perform preliminary processing on the signal collected by the sensor to obtain the original signal of the sensor, wherein the sensor is arranged on the construction machine, and the preliminary processing comprises analog-to-digital conversion processing and data buffering processing.

For example, the signal collection module 410 comprises a plurality of sensors, such as an acceleration sensor, a gyroscope, a position sensor, an environmental sensor and the like. The signal collection module 410 also comprises an information processor. The sensors collect various signals generated during the operation process of the construction machinery (for example, the excavator) in real time, and transmits the signals to the information processor of the signal collection module.

In some embodiments, the signal processing system further comprises a segmentation processing module (not shown). The segmentation processing module is configured to perform segmentation processing on the original signal with a non-stationary interference signal to obtain multiple signal segments, wherein the interference signal of each of the multiple signal segments is in a stationary state, wherein preprocessing, weighted fractional Fourier transform and spectrum analysis are performed on each of the multiple signal segments to separate an interference signal of the each of the multiple signal segments from the each of the multiple signal segments, so as to obtain a useful signal of the each of the multiple signal segments.

The workflow of the signal processing system shown in Fig. 4 comprises the following steps (1) to (6).
(1) Signal collection. The sensor collects various signals generated during the operation process of the excavator in real time, and transmits the signals to the information processor of the signal collection module. The information processor preliminarily processes the data of the sensor, such as analog-to-digital conversion, data buffering and the like.
   For example, the method and system of the present disclosure may also use multi-sensor data fusion technology. In the multi-sensor data fusion technology, the operating state and the environmental signal of the construction machinery (for example, the unmanned excavator) can be comprehensively obtained, and a more comprehensive signal processing basis is provided. By performing multi-sensor data fusion, the interference signal can be better identified and separated, so that the accuracy and robustness of signal processing can be improved. The methods of data fusion may comprise a weighted average method, a Kalman filtering method, a Bayesian estimation method or the like, and an appropriate data fusion method may be selected according to specific application requirements.
(2) Preprocessing. The preprocessing module filters, denoises and normalizes the original signal collected. High-frequency noise and low-frequency drift are removed by preprocessing so as to improve the clarity and stability of the signal.
(3) Weighted fractional Fourier transform processing. The weighted fractional Fourier transform processing module performs WFRFT processing on the preprocessed signal. WFRFT processing is performed to obtain a representation form of the signal in a time-frequency domain, which provides a basis for subsequent separation and extraction of the interference signal.
(4) Separation and extraction of the interference signal. Based on the WFRFT result, the interference signal separation module, by analyzing the characteristics of the signal in each frequency domain, identifies and extracts the frequency component and the harmonic component of the interference signal, and separates the same from the original signal.
(5) Anti-interference processing. The anti-interference processing module filters and suppresses the separated interference signal so as to improve the integrity and accuracy of the useful signal. The module may dynamically adjust and process the interference signal by using the adaptive filtering technology, so as to minimize the influence of the interference on the useful signal.
(6) Signal output. The signal output module outputs the processed useful signal to the control system of the construction machinery (for example, the unmanned excavator). After anti-interference processing, the output signal presents higher stability and accuracy, which can significantly improve the operational performance and safety of the excavator.

The embodiment of the present disclosure provides an anti-interference signal processing method and system based on weighted fractional Fourier transform, which may improve the operational performance and safety of the construction machinery (for example, the unmanned excavator) in a complex environment. With the development and popularization of the unmanned control technology, the construction machinery such as an excavator will be more and more widely applied in various complex environments. The method and system of the present invention may enhance the anti-interference capability and the signal processing accuracy of the unmanned control system, and improve its stability and reliability in a complex environment, so as to promote further development and application of the unmanned control technology in the field of the construction machinery.

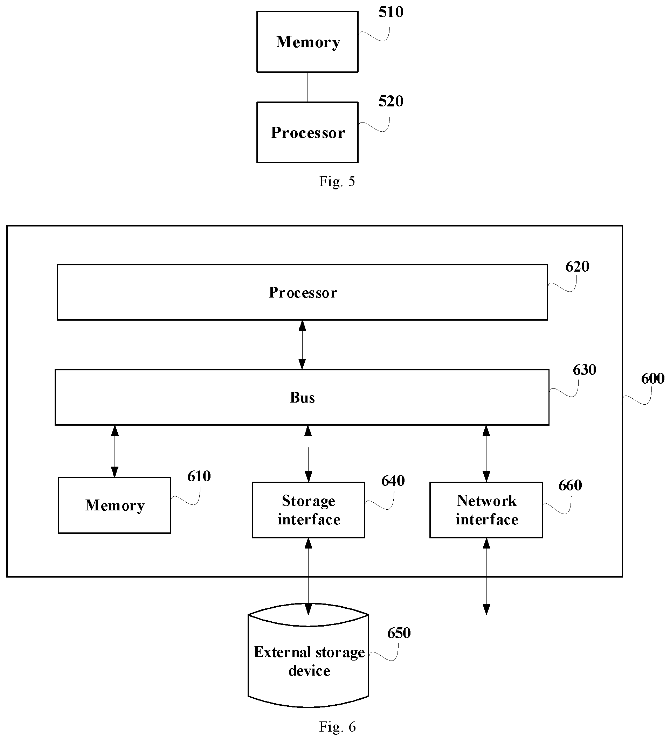

Fig. 5 is a block diagram schematically showing a structure of a signal processing system according to other embodiments of the present disclosure. The signal processing system comprises a memory 510 and a processor 520.

The memory 510 may be a magnetic disk, a flash memory, or any other non-volatile storage medium. The memory is configured to store instructions in the embodiment corresponding to Fig. 1 and/or Fig. 2.

The processor 520 which is coupled to the memory 510, may be implemented as one or more integrated circuits, such as a microprocessor or a microcontroller. The processor 520 is configured to execute instructions stored in the memory, which can improve the anti-interference capability for the related signal of the construction machinery.

In some embodiments, it may also be that, as shown in Fig. 6, the signal processing system 600 comprises a memory 610 and a processor 620. The processor 620 is coupled to the memory 610 via a bus 630. The signal processing system 600 may also be connected to an external storage device 650 via a storage interface 640 for calling external data, and may also be connected to a network or another computer system (not shown) via a network interface 660, which will not be introduced in detail here.

In this embodiment, by storing data instructions by the memory and processing the above-described instructions by the processor, the anti-interference capability for the related signal of the construction machinery can be improved.

In some embodiments of the present disclosure, a construction machinery is also provided. The construction machinery comprises the signal processing system as described previously (for example, the signal processing system shown in Fig. 3, Fig. 4, Fig. 5 or Fig. 6). For example, the construction machinery is an unmanned excavator , etc.

In some embodiments, the present disclosure also provides a computer-readable storage medium (for example, a non-transitory computer-readable storage medium) having computer program instructions stored thereon that, when executed by a processor, implement the steps of the method in the embodiments corresponding to Fig. 1 and/or Fig. 2. Those skilled in the art will appreciate that the embodiments of the present disclosure may be provided as a method, device, or computer program product. Therefore, the present disclosure may take the form of an entirely hardware embodiment, an entirely software embodiment, or an embodiment combining software and hardware aspects. Moreover, the present disclosure may take the form of a computer program product implemented in one or more computer-usable non-transitory storage media (comprising but not limited to a disk memory, CD-ROM, an optical memory, and the like) containing computer usable program codes therein.

The present disclosure is described with reference to the flow charts and/or block diagrams of the methods, devices (systems), and computer program products according to the embodiments of the present disclosure. It will be understood that each flow and/or block of the flow charts and/or block diagrams as well as a combination of flows and/or blocks of the flow charts and/or block diagrams may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more flows of a flow chart and/or one or more blocks in a block diagram.

These computer program instructions may also be stored in a computer readable memory that can guide a computer or other programmable data processing device to operate in a particular manner, such that the instructions stored in the computer readable memory produce a manufacture comprising an instruction device. The instruction device realizes a function designated in one or more flows in a flow chart and/or one or more blocks in a block diagram.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more flows of the flow chart and/or one or more blocks in the block diagram.

In some embodiments of the present disclosure, a computer program product is also provided. The computer program product comprises a computer program or instructions that, when executed by a processor, implement the signal processing method as described previously.

In some embodiments of the present disclosure, a computer program is also provided. The computer program comprises instructions that, when executed by a processor, cause the processor to perform the signal processing method as described previously.

Hitherto, the present disclosure has been described in detail. In order to avoid obscuring the concept of the present disclosure, some details commonly known in the art have not been described. From the above descriptions, those skilled in the art may fully understand how to implement the technical solutions disclosed here.

Although some specific embodiments of the present disclosure have been described in detail by way of examples, those skilled in the art should understand that the above examples are only for an illustrative purpose, rather than limiting the scope of the present disclosure. Those skilled in the art should appreciate that modifications to the above embodiments may be made without departing from the scope and spirit of the present disclosure. The scope of the present disclosure is defined by the appended claims.

## Claims

1. A signal processing method, comprising:
preprocessing an original signal of a sensor to obtain a preprocessed signal;
performing weighted fractional Fourier transform on the preprocessed signal to obtain a weighted fractional Fourier transformed signal;
performing spectrum analysis on the weighted fractional Fourier transformed signal to obtain spectral components, wherein the spectral components comprise a fundamental frequency component and a harmonic component;
separating an interference signal from the original signal based on the fundamental frequency component and the harmonic component to obtain a useful signal; and
outputting the useful signal to a control system of construction machinery.

2. The signal processing method according to claim 1, wherein the interference signal corresponds to the harmonic component and the useful signal corresponds to the fundamental frequency component.

3. The signal processing method according to claim 1 or 2, wherein the performing of the weighted fractional Fourier transform on the preprocessed signal to obtain the weighted fractional Fourier transformed signal comprises:
obtaining a transform order of the weighted fractional Fourier transform;
calculating a weighting function of the weighted fractional Fourier transform based on the transform order;
and
performing the weighted fractional Fourier transform on the preprocessed signal based on the weighting function to obtain the weighted fractional Fourier transformed signal.

4. The signal processing method according to claim 3, wherein the obtaining of the transform order of the weighted fractional Fourier transform comprises:
performing, based on each of a plurality of transform orders within a predetermined range, simulation processing on a signal transmission quality of the preprocessed signal through a communication quality simulation model to obtain a simulation result, so as to obtain a plurality of simulation results corresponding to the plurality of transform orders, wherein a channel coding mode of the communication quality simulation model adopts the weighted fractional Fourier transform, and each of the plurality of simulation results comprises a bit error rate or a packet loss rate; and
selecting a transform order corresponding to the simulation result with a minimum bit error rate or a minimum packet loss rate from the plurality of simulation results as a required transform order.

5. The signal processing method according to any of claims 1 to 4, wherein the separating of the interference signal from the original signal based on the fundamental frequency component and the harmonic component to obtain the useful signal comprises:
dynamically adjusting a threshold for spectrum analysis through an adaptive threshold method, wherein the threshold comprises a first threshold and a second threshold, and the first threshold is less than the second threshold;
based on the fundamental frequency component and the harmonic component, taking a signal part of the original signal corresponding to a spectral component in a range between the first threshold and the second threshold as the useful signal, and taking a signal part of the original signal corresponding to a spectral component in a range less than the first threshold and a signal part of the original signal corresponding to a spectral component in a range greater than the second threshold as the interference signal; and
removing the interference signal and retaining the useful signal.

6. The signal processing method according to any of claims 1 to 5, further comprising:
performing segmentation processing on the original signal with a non-stationary interference signal to obtain multiple signal segments, wherein the interference signal of each of the multiple signal segments is in a stationary state; and
performing preprocessing, weighted fractional Fourier transform and spectrum analysis on each of the multiple signal segments to separate the interference signal of the each of the multiple signal segments from the each of the multiple signal segments, so as to obtain a useful signal of the each of the multiple signal segments.

7. The signal processing method according to any of claims 1 to 6, wherein the preprocessing of the original signal of the sensor comprises:
filtering, denoising and normalizing the original signal of the sensor.

8. The signal processing method according to any of claims 1 to 7, further comprising:
performing anti-interference processing on the useful signal before outputting the useful signal to the control system of the construction machinery, wherein the anti-interference processing adopts an adaptive filtering mode.

9. The signal processing method according to any of claims 1 to 8, further comprising:
obtaining a signal collected by the sensor before preprocessing the original signal of the sensor, wherein the sensor is arranged on the construction machine; and
performing preliminary processing on the signal collected by the sensor to obtain the original signal of the sensor, wherein the preliminary processing comprises analog-to-digital conversion processing and data buffering processing.

10. A signal processing system, comprising:
a preprocessing module configured to preprocess an original signal of a sensor to obtain a preprocessed signal;
a weighted fractional Fourier transform processing module configured to perform weighted fractional Fourier transform on the preprocessed signal to obtain a weighted fractional Fourier transformed signal;
an interference signal separation module configured to perform spectrum analysis on the weighted fractional Fourier transformed signal to obtain spectral components, wherein the spectral components comprise a fundamental frequency component and a harmonic component, and separate an interference signal from the original signal based on the fundamental frequency component and the harmonic component to obtain a useful signal; and
a signal output module configured to output the useful signal to a control system of construction machinery.

11. A signal processing system, comprising:
a memory; and
a processor coupled to the memory, wherein the processor is configured to perform the signal processing method according to any of claims 1 to 9 based on instructions stored in the memory.

12. A construction machinery, comprising: the signal processing system according to claim 10 or 11.

13. The construction machinery according to claim 12, wherein the construction machinery is an unmanned excavator.

14. A computer readable storage medium having stored thereon computer instructions that, when executed by a processor, implement the signal processing method according to any of claims 1 to 9.

15. A computer program, comprising instructions that, when executed by a processor, cause the processor to perform the signal processing method according to any of claims 1 to 9.
